# EUROPÄISCHE PATENTSCHRIFT

(11) **EP 0 881 131 B1**
(45) Veröffentlichungstag und Bekanntmachung des Hinweises auf die Patenterteilung: **25.08.2004**
(21) Anmeldenummer: 98109747.0
(22) Anmeldetag: 28.05.1998
(51) Int. Cl.: B60R 21/26, C06D 5/00, F42C 19/08

(54) **Pyrotechnische Einrichtung für Fahrzeuginsassen-Schutzsysteme**
Pyrotechnic device for a vehicle occupant protection system
Dispositif pyrotechnique pour système de protection des occupants d'un véhicule automobile

(30) Priorität: 28.05.1997 DE 29709390 U; 24.11.1997 DE 29720819 U
(43) Veröffentlichungstag der Anmeldung: 02.12.1998
(73) Patentinhaber: TRW Automotive GmbH, 73553 Alfdorf (DE)
(72) Erfinder: Wier, Franz, 73571 Göggingen (DE)
(74) Vertreter: Degwert, Hartmut, Dipl.-Phys.

(56) Entgegenhaltungen:
- EP-A- 0 600 791
- EP-A- 0 704 348
- WO-A-95/11421
- WO-A-95/20509
- US-A- 3 760 729
- US-A- 5 062 367
- US-A- 5 100 174
- US-A- 5 624 134

## Beschreibung

Die Erfindung betrifft eine pyrotechnische Einrichtung für Fahrzeuginsassen-Schutzsysteme nach dem Oberbegriff der Ansprüche 1 und 2.

Bekannt sind pyrotechnische Einrichtungen, bei denen eine elektrisch betätigte Zündvorrichtung von festem Treibmittel umgeben ist, das nach einer Zündung spontan verbrennt. Das hierbei erzeugte heiße Gas dient beispielsweise der Zündung weiterer Treiblandungen oder direkt zum Aufblasen eines Gassacks oder zum Straffen eines Sicherheitsgurts. Ebenfalls bekannt sind pyrotechnische Einrichrungen, bei denen eine elektrisch betätigte Zündvorrichtung von einer geringen Menge festen Treibmittels umgeben ist und Zündvorrichtung und Treibmittel innerhalb eines mit Druckgas gefüllten Behälters angeordnet sind. Zündvorrichtung und Treibmittel dienen dazu, nach der Zündung eine im Behälter vorgesehenen Berstmembran zu öffnen und beim nachfolgenden Ausströmen des Druckgases dessen Temperatur- und Druckverlust während einer bestimmten Zeitspanne auszugleichen. Der Behälter für Zündvorrichtung, Treibmittel und/oder Druckgas ist üblicherweise mit einer Fassung verpreßt, so daß Umgebungseinflüsse, wie z.B. Feuchtigkeit, vom Inneren des Behälters abgehalten werden. Wird Gasdichtigkeit des Behälters verlangt, beispielsweise 0,5% Verlust in 15 Jahren bei 220 bar Helium, muß dieser durch aufwendige und teure Verfahren, wie z.B. Glasverguß der Fügestellen, abgedichtet werden, da Schweißen oder Löten aufgrund der hohen auftretenden Temperaturen, die Zündvorrichtung, Treibmittel oder Druckgas beschädigen oder beeinträchtigen, nicht in Betracht kommen.

Aus der WO 95/20509 ist eine pyrotechnische Einrichtung der eingangs genannten Art bekannt, bei der eine Berstmembran in ein Halteteil eingefügt ist, in dem mehrere Hohlräume gebildet sind. Die Hohlräume sind jeweils von einer kleinen Kunststoffplatte umgeben, die durch eine ultraschallgeschweißte Verbindung mit dem Halteteil verbunden ist.

Mit der Erfindung soll die Herstellung von gasdichten und langzeitstabilen pyrotechnischen Einrichtungen vereinfacht werden.

Gemäß einem ersten Aspekt der Erfindung ist zur Lösung dieser Aufgabe eine pyrotechnische Einrichtung der eingangs genannten Art mit den kennzeichnenden Merkmalen des Anspruchs 1 vorgesehen. Die ultraschallgeschweißte Verbindung ist gasdicht und darüber hinaus langzeitstabil. Indem bei der Ultraschallschweißung die Kontaktflächen zwischen Behälterkörper und Behälterdeckel durch Reibung nur lokal erwärmt werden, bleibt der übrige Behälter weitgehend kalt, so daß Zünder, Treibmittel oder Druckgas bei der Ultraschallschweißung nicht oder nur unwesentlich erwärmt werden. Überraschenderweise wurde festgestellt, daß sich bei der Ultiaschallschweißung die Erwärmung nicht bis an die mit dem Treibmittel in Berührung stehenden Innenwände fortsetzt. Das Vorsehen einer Berstmembran im Behälterkörper und/oder im Behälterdeckel vereinfacht die Herstellung der pyrotechnischen Einrichtung, da keine separate Berstmembran gasdicht mit dem Behälterkörper oder dem Behälterdeckel verbunden werden muß. Durch die Einkerbung wird ein kontrolliertes Aufreißen der Berstmembran bei Erreichen eines vorbestimmten Innendruckes ermöglicht.

Gemäß einem zweiten Aspekt wird die Aufgabe der Erfindung auch durch eine pyrotechnische Einrichtung der eingangs genannten Art mit den kennzeichnenden Merkmalen des Anspruch 2 gelöst.

Das Absetzen der Berstmembran kann beispielsweise durch Abstrecken erfolgen. Es ist ebenfalls möglich, den gesamten Behälterdeckel oder Behälterkörper mit der Berstmembran durch Kaltfließpressen oder Tiefziehen herzustellen. Durch das Absetzen der Berstmembran ergibt sich eine Kaltverfestigung des abgesetzten Bereichs, so daß die Berstmembran gezielt aufreißt oder durch den Innendruck durchgestanzt wird, anstatt, wie ein weicher Werkstoff, sich teilweise durchzubiegen und unkontrolliert aufzuplatzen.

In Weiterbildung der Erfindung ist vorgesehen, daß der Behälterkörper und/oder der Behälterdeckel aus Buntmetall oder einer Buntmetallegierung hergestellt sind. Die Verwendung von Buntmetall oder einer Buntmetallegierung bietet gute Bedingungen für eine Ultraschallschweißung zwischen Behälterkörper und Behälterdeckel. Beispielsweise ist der Einsatz von Cu 99,5, einer Bronzelegierung oder einer Messinglegierung möglich. Vorteilhaft ist der Einsatz eines weichen Werkstoffes für den Behälterdeckel und eines härteren Werkstoffes für den Behälterkörper. Ein härterer Werkstoff für den Behälterkörper begünstigt ein kontrolliertes Aufreißen einer in dessen Wandung vorgesehenen Berstmembran.

In vorteilhafter Weise können Behälterkörper und/oder Behälterdeckel auch aus Aluminium oder einer Aluminiumlegierung hergestellt werden. Behälterkörper und Behälterdeckel werden dabei vorzugsweise aus Al 99,5-99,75 oder einer Aluminiumlegierung, wie z.B. AlMgSi 0,5, hergestellt

Als weiterbildende Maßnahme weist der Behälterkörper eine Umfangswand auf, auf deren Stirnfläche der Behälterdeckel aufgesetzt ist. Eine solche Ausbildung des Behälterkörpers führt zu einer für eine Ultraschallschweißung vorteilhaften Anordnung. Aufgrund der erwünschten hohen Flächenpressung beim Schweißvorgang wird die Kontaktfläche zwischen Behälterkörper und Behälterdeckel möglichst schmal, beispielsweise < 1 mm, gehalten.

Es ist vorteilhaft, daß die Stirnfäche der Umfangswand zur Behälteröffnung hin angefast ist und der Behälterdeckel an der Stirnfläche und der Fase anliegt. Hierdurch wird der Behälterdeckel durch einfaches Aufsetzen auf den Behälterkörper zentriert, da der Behälterdeckel dann an der Stirnseite und der Fase anliegt. Die Schweißung erfolgt dann im Bereich der Stirnfläche und im Bereich der Fase oder nur in einem der beiden Bereiche. Bei einer solchen Ausbildung von Behälter und Behältedeckel kann insbesondere bei dünnwandigen Behältern durch seitliche Abstützung der Umfangswand ein Ausknicken der Umfangswand bei von oben aufgebrachtem Schweißdruck verhindert werden.

Es ist ebenfalls vorteilhaft, daß der Behälterkörper einen umlaufenden Flansch aufweist, auf den der Behälterdeckel aufgesetzt ist. Auch bei sehr dünnwandigen Behältern wird dadurch eine für eine Ultraschallschweißung ausreichend stabile Kontaktfläche geschaffen. Ein umlaufender Flansch kann darüber hinaus gut abgestützt werden, so daß die erwünschte Flächenpressung beim Schweißvorgang auf einfache Weise erzeugt werden kann.

Weitere Merkmale und Vorteile der Erfindung ergeben sich aus der folgenden Beschreibung und aus der Zeichnung, auf die Bezug genommen wird. In der Zeichnung zeigen:
Figur 1 eine Schnittansicht des Behälters einer ersten Ausführungsform einer erfindungsgemäßen pyrotechnischen Einrichtung,
Figur 2 eine Schnittansicht des Behälters einer zweiten Ausführungsform,
die Figuren 3 bis 6 Schnittansichten verschiedener Gestaltungsmöglichkeiten des Kontaktbereiches zwischen Behälterdeckel und Behälterkörper,
Figur 7 eine Schnittansicht einer weiteren Ausführungsform der erfindungsgemäßen pyrotechnischen Einrichtung,
Figur 8 eine seitliche Schnittansicht entlang der Linie VIII-VIII der Figur 7,
Figur 9 eine Schnittansicht einer weiteren Ausführungsform der erfindungsgemäßen pyrotechnischen Einrichtung,
Figur 10 eine seitliche Schnittansicht entlang der Linie X-X der Figur 9,
Figur 11 eine Abdichtungsmöglichkeit einer Kabeldurchführung, und
Figur 12 eine Teilschnittansicht eines zur Rohrmontage geeigneten Behälters.

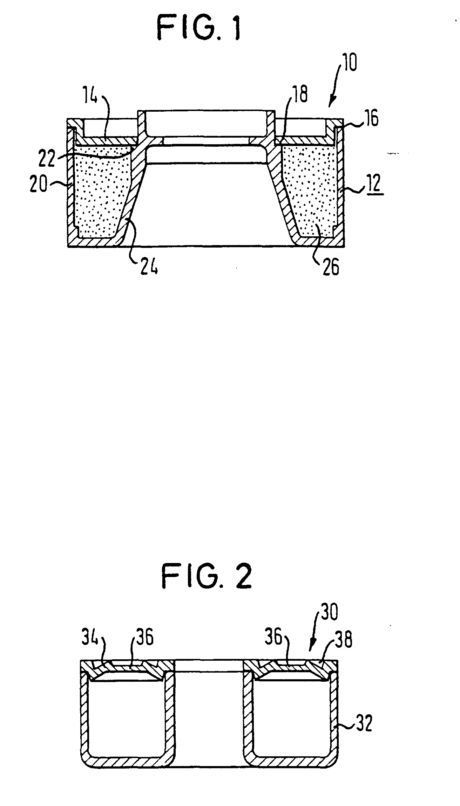

In der Fig. 1 ist ein rotationssymmetrischer Behälter 10 einer pyrotechnischen Druckgasquelle dargestellt. Der Behälter 10 dient zur Aufnahme einer Treibladung, die dadurch gezündet wird, daß ein außerhalb des Behälters 10 angeordneter konventioneller Zünder (nicht gezeigt) eine Wandung des Behälters 10 durchbrennt. Der Behälter 10 besteht aus einem Behälterkörper 12 und einem Behälterdeckel 14, die beide aus Aluminium hergestellt sind und die einander an ringförmigen Kontaktflächen 16 und 18 berühren und dort gasdicht ultraschallverschweißt sind. Ein solcher rotationssymmetrischer Behälter kann beispielsweise in einem Gurtstraffer vor einem Kolben in einem Zylinder angeordnet werden. Ein zur Straffung des Gurts erforderlicher Seilzug erstreckt sich dann durch die Mitte des torusförmigen Behälters 10. Der Behälterdeckel 14 weist an seinem äußeren Rand einen abgekröpften Bereich auf, mit dem er auf der Stirnfläche der äußeren Umfangswand 20 des Behälterkörpers 12 aufsitzt. Der innere Rand des Behälterdeckels 14 liegt auf einem Absatz 22 auf, der in einer inneren Umfangswand 24 des Behälterkörpers 12 ausgebildet ist.

Behälterkörper 12 und Behälterdeckel 14 umschließen damit einen ringförmigen Innenraum, der für die Aufnahme von Treibmittel 26 vorgesehen ist. Um Behälterkörper 12 und Behälterdeckel 14 nach dem Einfüllen des Treibmittels miteinander zu verschweißen, wird der Behälterkörper 12 an seiner Unterseite unterstützt und auf dem Behälterdeckel 14 im Bereich seines äußeren und seines inneren Randes ein in der Fig. 1 nach unten gerichteter Druck ausgeübt, so daß auf den umlaufenden Kontaktflächen 16 und 18 eine gleichmäßige Flächenpressung erzeugt wird. Gleichzeitig werden der Behälterkörper 12 und der Behälterdeckel 14 wenigstens im Bereich der Kontaktflächen 16 und 18 so in Schwingung versetzt, daß sie sich relativ zueinander, in der Fig. 1 horizontal, bewegen. Die Frequenz dieser Schwingung liegt dabei im Ultraschallbereich, und die Amplitude liegt im Bereich von 30 µm. Durch die Flächenpressung und die Relativbewegung im Bereich der Kontaktflächen 16, 18 tritt dort eine so starke Erwärmung auf, daß eine Schweißverbindung entsteht. Die Erwärmung ist dabei im wesentlichen auf den Bereich der Kontaktflächen 16 und 18 beschränkt, so daß die übrigen Bereiche des Behälterkörpers 12 und des Behälterdeckels 14 weitgehend kalt bleiben. Bezüglich der Gasdichtheit weist die Schweißnaht im wesentlichen die gleichen Eigenschaften wie das Grundmaterial des Behälterkörpers 12 und des Behälterdeckels 14 auf, so daß ohne zusätzliche Abdichtmaßnahmen hervorragende Eigenschaften erreicht werden.

Die Umfangswand 20 des Behälterkörpers 12 hat eine geringere Wandstärke als die übrigen Wandungen und als der Behälterdeckel 14, so daß zum einen die Umfangswand 20 durch einen außerhalb des Behälters angeordneten Zünder schnell durchgebrannt werden kann und zum anderen nach einer Zündung des Treibmittels 26 innerhalb des Behälters 10 die Umfangswand 20 zuerst birst.

Fig. 2 zeigt die Schnittansicht eines Behälters 30 einer zweiten Ausführungsform der Erfindung. Wie bei der in Fig. 1 gezeigten Ausführungsform legen ein Behälterkörper 32 und ein Behälterdeckel 34 einen ringförmigen Innenraum zur Aufnahme von Treibmittel fest. Der Behälterdeckel 34 weist eine Berstmembran 36 auf, die gegenüber der Oberfläche des Behälterdeckels 34 abgesetzt und von einer Einkerbung 38 umgeben ist. Die Wandstärke des Behälterdeckels 34 ist im Bereich der Berstmembran 36 stark verringert, so daß die Berstmembran 36 nach der Zündung des Treibmittels im Behälter 32 zuerst aufreißt. Bei der Herstellung des Behälterdeckels 34, beispielsweise durch Kaltfließpressen, wird der Bereich der Berstmembran 36 kalt verfestigt und reißt damit gezielter auf als ein weicherer Werkstoff.

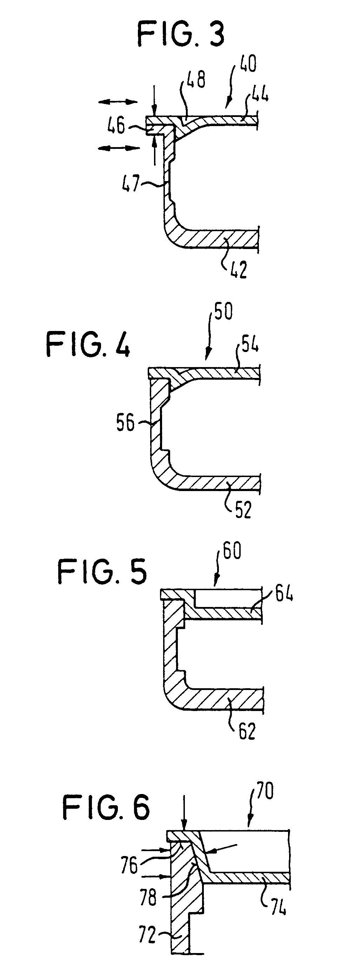

In der Fig. 3 ist eine Schnittansicht des äußeren Randbereichs eines Behälters 40 dargestellt, der wiederum aus einem Behälterkörper 42 und einem Behälterdeckel 44 besteht. Der Behälterkörper 42 weist einen umlaufenden Flansch 46 auf, auf dem der Randbereich des Behälterdeckels 44 aufliegt. Um den Flansch 46 und den Randbereich des Deckels 44 miteinander zu verschweißen, werden diese aufeinandergepreßt und im Ultraschallbereich horizontal zueinander in Schwingung versetzt, wie in Fig. 3 durch Pfeile angedeutet ist. Eine in der Umfangswand des Behälterkörpers 42 ausgebildete Berstmembran 47 wird von einem konventionellen, außerhalb angeordneten Zünder durchgebrannt, und eine umlaufende Einkerbung 48 auf dem Behälterdeckel 44 stellt ein kontrolliertes Aufreißen des Behälters 40 nach Zündung des Treibmittels im Behälter 40 sicher.

Bei dem in der Fig. 4 dargestellten Behälter 50 ist für die Ultraschallschweißverbindung zwischen Behälterkörper 52 und Behälterdeckel 54 die Stirnfläche einer äußeren Umfangswand 56 des Behälterkörpers 52 vorgesehen.

Fig. 5 zeigt einen weiteren Behälter 60 mit einem Behälterkörper 62 und einem Behälterdeckel 64. Der Behälterdeckel 64 ist in seinem äußeren Randbereich rechtwinklig abgekröpft und liegt dadurch sicher auf dem Behälterkörper 62 auf.

Bei dem abschnittsweise dargestellten Behälter 70 der Fig. 6 weist ein Behälterkörper eine äußere Umfangswand 72 auf, auf der ein Behälterdeckel 74 aufliegt. Die Stirnfläche 76 der Umfangswand 72 ist zur Behälteröffnung hin angefast, wodurch eine Fase 78 gebildet ist. Der Behälterdeckel 74 ist entsprechend dem Neigungswinkel der Fase 78 abgekröpft, so daß er sowohl an der Stirnfläche 76 als auch an der Fase 78 anliegt. Eine gleichmäßige Ultraschallschweißung im Bereich der Stirnfläche 76 und der Fase 78 wird durch Druck auf den Behälterkörper 72 und den Behälterdeckel 74 in Richtung der in der Fig. 6 angedeuteten Pfeile erreicht. Hierdurch kann insbesondere eine nur lokale Verschweißung an Kontaktstellen vermieden werden und statt dessen eine flächige, gasdichte Verschweißung erzielt werden.

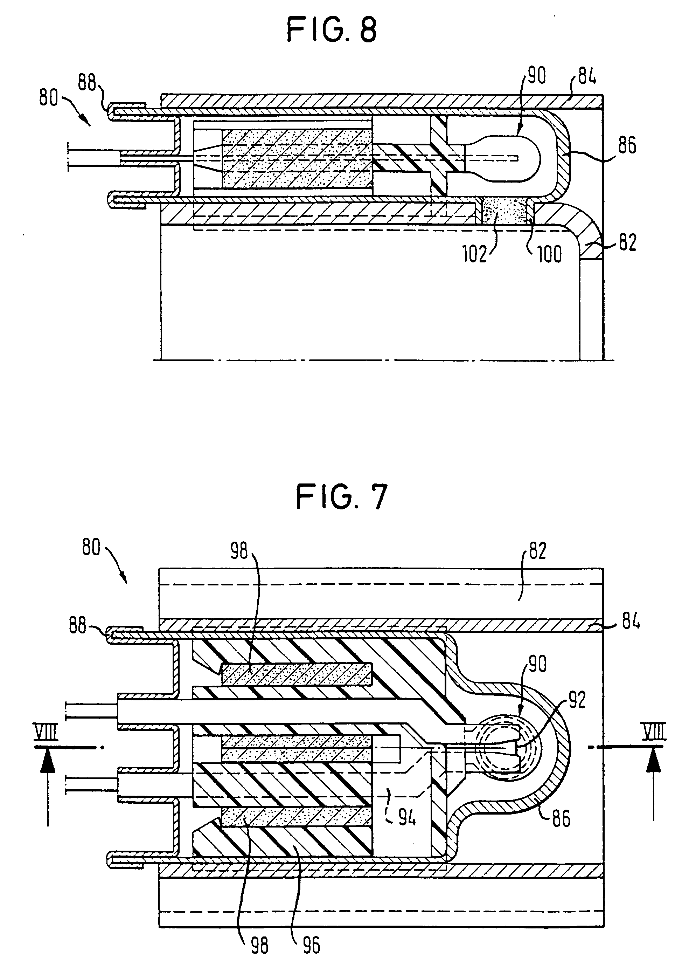

In den Figuren 7 und 8 ist eine weitere Ausführungsform einer erfindungsgemäßen pyrotechnischen Druckgasquelle gezeigt. Die pyrotechnische Einrichtung in den Figuren 7 und 8 ist als Zünder 80 ausgebildet und ist vorgesehen, eine konventionelle Treibladung für einen konventionellen Gurtstraffer (nicht gezeigt) zu zünden. Der Zünder 80 ist auf einem rohrförmigen Gasgenerator 82 angeordnet, in dem sich eine (nicht gezeigte) Treibladung befindet, und wird auf dem Gasgenerator 82 durch einen Klemmring 84 gehalten. Der Zünder 80 weist einen Behälter auf, der aus einem Behälterkörper 86 und einem Behälterdeckel 88 besteht, die beide aus Aluminium hergestellt und als Tiefzieh- oder Fließpreßteil ausgeführt sind. Innerhalb des Behälters ist eine Zündpille 90 angeordnet, die einen Glühdraht 92 aufweist, der zwei elektrische Leitungen 94 miteinander verbindet. Die elektrischen Leitungen 94 sind in einen Kunststoffkörper 96 eingebettet, der zusammen mit ferromagnetischen Bauteilen 98 in den Behälterkörper 86 eingeschoben ist. Der Behälterkörper 86 weist im Bereich der Zündpille 90 einen Fortsatz 100 mit einer Verstärkerladung 102 auf, der in eine Öffnung des Gasgenerators 82 gesteckt ist und dessen dünne Wandung bei der Zündung durchbrochen werden kann. Behälterkörper 86 und Behälterdeckel 88 sind durch eine ultraschallgeschweißte Verbindung aneinander befestigt und abgedichtet.

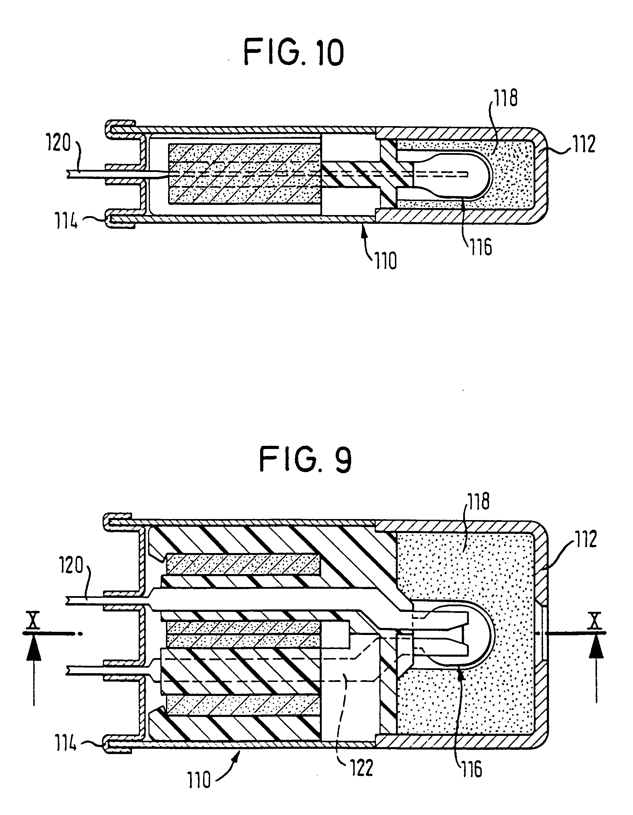

Wie in den Fig. 9 und 10 dargestellt ist, kann der Zünder auch in einem Gasgenerator 110 integriert sein. Der aus Behälterkörper 112 und Behälterdeckel 114 bestehende Behälter stellt dabei nicht nur das Gehäuse des Zünders sondern auch das Gehäuse des Gasgenerators 110 dar. Innerhalb des Behälters ist in dem Bereich der Zündpille 116 Platz für die Unterbringung eines Treibsatzes 118 vorgesehen. Der Behälterkörper 112 weist im Bereich um die Zündpille 116 herum, also der Brennkammer, eine größere Wandungsdicke auf. Behälterdeckel 114 und Behälterkörper 112 sind durch eine Ultraschallschweißung miteinander verbunden, während die sich durch den Behälterdeckel 114 erstreckenden Kontaktstifte 120, die die Leitungen 122 weiterführen, konventionell, beispielsweise mit Hilfe von Dichtungsmasse abgedichtet sind.

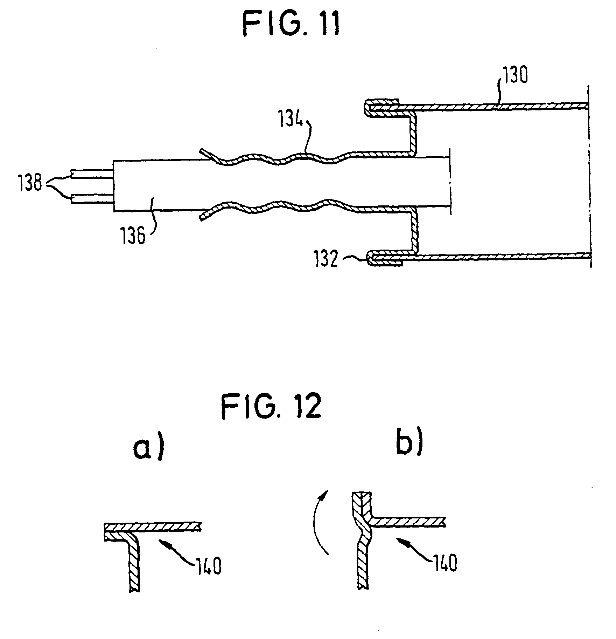

Eine weitere Möglichkeit der Abdichtung zwischen elektrischen Zuleitungen und Behälterdeckel zeigt Fig. 11. Behälterkörper 130 und Behälterdeckel 132 sind durch eine Ultraschallschweißung miteinander verbunden. Am Behälterdeckel 132 ist eine rohrföhrmige Hülse 134 ausgeformt, die zur Abdichtung mit einer Umhüllung 136 der elektrischen Zuleitungen 138 dichtend verpreßt wird.

Die Fig. 12 zeigt abschnittsweise einen Behälter 140, der in der Fig. 12a im Bereich seines umlaufenden Flansches ultraschallverschweißt wurde. Der umlaufende Flansch ermöglicht dabei eine einfache und zuverlässige Ultraschallschweißung, ist jedoch bei der Montage des Behälters in einem Rohr problematisch. Soll der Behälter 140 daher beispielsweise in dem Rohr eines Gurtstraffers montiert werden, wird der umlaufende Flansch, wie in der 12b gezeigt ist, nach oben umgebogen. Der Behälter 140 kann nun problemlos in ein Rohr eingeschoben werden.

## Patentansprüche

1. Pyrotechnische Einrichtung für Fahrzeuginsassen-Schutzsysteme mit einem Behälter (10; 30; 40; 50; 60; 70) für eine Zündvorrichtung, für ein Treibmittel und/oder Druckgas, wobei der Behälter (10; 30; 40; 50; 60; 70) einen Behälterkörper (12; 42; 52; 62; 86) und wenigstens einen Behälterdeckel (34; 44; 54) umfaßt, zwischen denen eine ultraschallgeschweißte, gasdichte Verbindung vorgesehen ist, und in dem Behälterkörper (12; 42; 52; 62; 86) und/oder in dem Behälterdeckel (34; 44; 54) eine Berstmembran (36; 47, 56) ausgeformt ist, **dadurch gekennzeichnet, daß** der Bereich der Berstmembran (36) von einer Einkerbung (38; 48) umgeben ist.

2. Pyrotechnische Einrichtung für Fahrteuginsassen-Schutzsysteme mit einem Behälter (10; 30; 40; 50; 60; 70) für eine Zündvorrichtung, für ein Treibmittel und/oder Druckgas, wobei der Behälter (10; 30; 40; 50; 60; 70) einen Behälterkörper (12; 42; 52; 62; 86) und wenigstens einen Behälterdeckel (34; 44; 54) umfaßt, zwischen denen eine ultraschallgeschweißte, gasdichte Verbindung vorgesehen ist, und in dem Behälterkörper (12; 42; 52; 62; 86) und/oder in dem Behälterdeckel (34; 44; 54) eine Berstmembran (36; 47; 56) ausgeformt ist, **dadurch gekennzeichnet, daß** der Bereich der Berstmembran (36) von der Oberfläche der umgebenden Wandung des Behälterkörpers (12; 42; 52; 62; 86) bzw. des Behälterdeckels (34; 44; 54) abgesetzt ist.

3. Pyrotechnische Einrichtung nach Anspruch 1 oder 2, **dadurch gekennzeichnet, daß** Behälterkörper (12; 32; 42; 52; 62; 86) und/oder Behälterdeckel (14; 34; 44; 54; 64; 74; 88) aus Buntmetall oder einer Buntmetallegierung hergestellt sind.

4. Pyrotechnische Einrichtung nach Anspruch 3, **dadurch gekennzeichnet, daß** Behälterkörper und/oder Behälterdeckel aus Kupfer hergestellt sind.

5. Pyrotechnische Einrichtung nach Anspruch 3, **dadurch gekennzeichnet, daß** Behälterkörper und/oder Behälterdeckel aus Bronze hergestellt sind.

6. Pyrotechnische Einrichtung nach Anspruch 3, **dadurch gekennzeichnet, daß** Behälter und/oder Behälterdeckel aus Messing hergestellt sind.

7. Pyrotechnische Einrichtung nach Anspruch 1 oder 2, **dadurch gekennzeichnet, daß** Behälterkörper (12; 32; 42; 52; 62; 86) und/oder Behälterdeckel (14; 34; 44; 54; 64; 74; 88) aus Aluminium oder einer Aluminiumlegierung hergestellt sind.

8. Pyrotechnische Einrichtung nach einem der vorstehenden Ansprüche, **dadurch gekennzeichnet, daß** Behälterkörper (12; 32; 52; 62; 86) eine Umfangswand (20; 56; 72) aufweist, auf deren Stirnfläche (76) der Behälterdeckel (14; 34; 54; 64; 74; 88) aufgesetzt ist.

9. Pyrotechnische Einrichtung nach Anspruch 8, **dadurch gekennzeichnet, daß** die Stirnfläche (76) der Umfangswand (72) zur Behälteröffnung hin angefast ist und der Behälterdeckel (74) an der Stirnfläche (76) und der Fase (78) anliegt.

10. Pyrotechnische Einrichtung nach einem der Ansprüche 1 bis 7, **dadurch gekennzeichnet, daß** der Behälterkörper (42) einen umlaufenden Flansch (46) aufweist, auf den der Behälterdeckel (44) aufgesetzt ist.

## Claims

1. A pyrotechnic means for vehicle occupant protection systems, comprising a container (10; 30; 40; 50; 60; 70) for an igniter, a propellant and/or a compressed gas, the container (10; 30; 40; 50; 60; 70) including a container body (12; 42; 52; 62; 86) and at least one container lid (34; 44; 54) with an ultrasonic welded, gas-tight joint provided between the container body (12; 42; 52; 62; 86) and the container lid (34; 44; 54), and a bursting diaphragm (36; 47; 56) being formed in the container body (12; 42; 52; 62; 86) and/or in the container lid (34; 44; 54), **characterized in that** the region of the bursting diaphragm (36) is surrounded by a notch (3 8; 48).

2. A pyrotechnic means for vehicle occupant protection systems, comprising a container (10; 30; 40; 50; 60; 70) for an igniter, a propellant and/or a compressed gas, the container (10; 30; 40; 50; 60; 70) including a container body (12; 42; 52; 62; 86) and at least one container lid (34; 44; 54) with an ultrasonic welded, gas-tight joint provided between the container body (12; 42; 52; 62; 86) and the container lid (34; 44; 54), and a bursting diaphragm (36; 47; 56) being formed in the container body (12; 42; 52; 62; 86) and/or in the container lid (34; 44; 54), **characterized in that** the region of the bursting diaphragm (36) is offset relative to the surface of the surrounding wall of the container body (12; 42; 52; 62; 86) or of the container lid (34; 44; 54).

3. The pyrotechnic means as set forth in claim 1 or 2, **characterized in that** the container body (12; 32; 42; 52; 62; 86) and/or the container lid (14; 34; 44; 54; 64; 74; 88) are made of a non-ferrous metal or a non-ferrous metal alloy.

4. The pyrotechnic means as set forth in claim 3, **characterized in that** the container body and/or the container lid are made of copper.

5. The pyrotechnic means as set forth in claim 3, **characterized in that** the container body and/or the container lid are made of bronze.

6. The pyrotechnic means as set forth in claim 3, **characterized in that** the container body and/or the container lid are made of brass.

7. The pyrotechnic means as set forth in claim 1 or 2, **characterized in that** the container body (12; 32; 42; 52; 62; 86) and/or the container lid (14; 34; 44; 54; 64; 74; 88) are made of aluminium or an aluminium alloy.

8. The pyrotechnic means as set forth in any of the preceding claims, **characterized in that** the container body (12; 32; 52; 62; 86) comprises a peripheral wall (20; 56; 72), on the front face (76) of which the container lid (14; 34; 54; 64; 74; 88) is mounted.

9. The pyrotechnic means as set forth in claim 8, **characterized in that** the front face (76) of the peripheral wall (72) is chamfered towards the container opening and the container lid (74) rests against the front face (76) and the chamfer (78).

10. The pyrotechnic means as set forth in any of claims 1 to 7, **characterized in that** the container body (42) has a surrounding flange (46) on which the container lid (44) is mounted.

## Revendications

1. Dispositif pyrotechnique pour systèmes de protection d'occupants de véhicules, comportant un récipient (10 ; 30 ; 40 ; 50 ; 60 ; 70) pour un dispositif d'allumage, pour un agent propulseur et/ou un gaz sous pression, le récipient (10 ; 30 ; 40 ; 50 ; 60 ; 70) comprenant un corps de récipient (12 ; 42 ; 52 ; 62 ; 86) et au moins un couvercle de récipient (34 ; 44 ; 54), entre lesquels est prévue une liaison soudée par ultrasons et étanche aux gaz, et une membrane de rupture (36 ; 47 ; 56) étant formée dans le corps de récipient (12 ; 42 ; 52 ; 62 ; 86) et/ou dans le couvercle de récipient (34 ; 44 ; 54), **caractérisé en ce que** la région de la membrane de rupture (36) est entourée par une rainure (34 ; 48).

2. Dispositif pyrotechnique pour systèmes de protection d'occupants de véhicules, comportant un récipient (10 ; 30 ; 40 ; 50 ; 60 ; 70) pour un dispositif d'allumage, pour un agent propulseur et/ou un gaz sous pression, le récipient (10 ; 30 ; 40 ; 50 ; 60 ; 70) comprenant un corps de récipient (12 ; 42 ; 52 ; 62 ; 86) et au moins un couvercle de récipient (34 ; 44 ; 54), entre lesquels est prévue une liaison soudée par ultrasons et étanche aux gaz, et une membrane de rupture (36 ; 47 ; 56) étant formée dans le corps de récipient (12 ; 42 ; 52 ; 62 ; 86) et/ou dans le couvercle de récipient (34 ; 44 ; 54), **caractérisé en ce que** la région de la membrane de rupture (36) est décalée par rapport à la surface de la paroi environnante du corps de récipient (12 ; 42 ; 52 ; 62 ; 86) ou du couvercle de récipient (34 ; 44 ; 54), respectivement.

3. Dispositif pyrotechnique selon la revendication 1 ou 2, **caractérisé en ce que** le corps de récipient (12 ; 42 ; 52 ; 62 ; 86) et/ou le couvercle de récipient (14 ; 34 ; 44 ; 54 ; 64 ; 74 ; 88) sont réalisés en métal non ferreux ou en un alliage de métal non ferreux.

4. Dispositif pyrotechnique selon la revendication 3, **caractérisé en ce que** le corps de récipient et/ou le couvercle de récipient sont réalisés en cuivre.

5. Dispositif pyrotechnique selon la revendication 3, **caractérisé en ce que** le corps de récipient et/ou le couvercle de récipient sont réalisés en bronze.

6. Dispositif pyrotechnique selon la revendication 3, **caractérisé en ce que** le corps de récipient et/ou le couvercle de récipient sont réalisés en laiton.

7. Dispositif pyrotechnique selon la revendication 1 ou 2, **caractérisé en ce que** le corps de récipient (12 ; 32 ; 42 ; 52 ; 62 ; 86) et/ou le couvercle de récipient (14 ; 34 ; 44 ; 54 ; 64 ; 88) sont réalisés en aluminium ou en un alliage d'aluminium.

8. Dispositif pyrotechnique selon l'une des revendications précédentes, **caractérisé en ce que** le corps de récipient (12 ; 32 ; 52 ; 62 ; 86) présente une paroi périphérique (20 ; 56 ; 72) sur la face frontale (76) de laquelle est posé le couvercle de récipient (14 ; 34 ; 54 ; 64 ; 74 ; 88).

9. Dispositif pyrotechnique selon la revendication 8, **caractérisé en ce que** la face frontale (76) de la paroi périphérique (72) est chanfreinée vers l'ouverture du récipient, et **en ce que** le couvercle de récipient (74) est en appui sur la face frontale (76) et sur le chanfrein (78).

10. Dispositif pyrotechnique selon l'une des revendications 1à 7, **caractérisé en ce que** le corps de récipient (42) présente une bride périphérique (46) sur laquelle est posé le couvercle de récipient (44).
